# EUROPEAN PATENT APPLICATION

(11) **EP 3 073 694 A1**
(43) Date of publication of application: **28.09.2016**
(21) Application number: 13897713.7
(22) Date of filing: 21.11.2013
(51) Int. Cl.: H04L 25/08

(54) **SELF-INTERFERENCE CHANNEL ESTIMATION METHOD AND DEVICE**

(71) Applicant: Huawei Technologies Co., Ltd., Longgang District Shenzhen, Guangdong 518129 (CN)
(72) Inventor: CHENG, Hong, Shenzhen Guangdong 518129 (CN); CHEN, Teyan, Shenzhen Guangdong 518129 (CN); LIU, Sheng, Shenzhen Guangdong 518129 (CN)
(74) Representative: Körber, Martin Hans
(86) International application number: PCT/CN2013/087635
(87) International publication number: WO 2015/074230

(57) **Abstract**

The present invention discloses a self-interference channel estimation method and apparatus and relates to the communications field, which can solve a problem that a system data throughput is reduced during self-interference channel estimation. A specific solution is as follows: The self-interference channel estimation apparatus sends an estimation signal to a receiving apparatus and receives the estimation signal sent by the self-interference channel estimation apparatus, and then performs self-interference channel estimation according to the received estimation signal. The present invention is applied to self-interference channel estimation.

## Description

### TECHNICAL FIELD

The present invention relates to the communications field, and in particular, to a self-interference channel estimation method and apparatus.

### BACKGROUND

A duplex mode is one of basic communications concepts and includes half-duplex and full-duplex. It is assumed that communication parties are two transceivers. If transceiver A can only transmit a signal to transceiver B, and transceiver B can only receive the signal transmitted by transceiver A, this is referred to as simplex communication. If on a particular time-frequency resource, transceiver A transmits a signal to transceiver B, and transceiver B receives the signal of transceiver A; on a different time-frequency resource, transceiver B transmits a signal to transceiver A, and transceiver A receives the signal of transceiver B, this is referred to as half-duplex communication. If on a same time-frequency resource, transceiver A transmits a signal to transceiver B and also receives a signal transmitted by transceiver B, and transceiver B transmits a signal to transceiver A and also receives a signal transmitted by transceiver A, this is referred to as full-duplex communication.

In duplex technologies, interference from a transmit signal of a communications transceiver to a wanted receive signal of the communications transceiver is referred to as self-interference. A channel response of a self-interference channel needs to be estimated to reduce impact of self-interference on a communications signal.

However, in the prior art, a system throughput is reduced in a solution for channel response estimation of a self-interference channel.

### SUMMARY

Embodiments of the present invention provide a self-interference channel estimation method and apparatus, which can solve a problem that a system throughput is reduced during self-interference channel estimation.

To achieve the foregoing objective, the following technical solutions are provided in the embodiments of the present invention:

According to a first aspect, a self-interference channel estimation apparatus is provided, including:
a sending unit, configured to send an estimation signal to a receiving apparatus, where the estimation signal is a signal unknown to the receiving apparatus;
a receiving unit, configured to receive the estimation signal sent by the sending unit; and
an estimation unit, configured to perform self-interference channel estimation according to the estimation signal received by the receiving unit.

With reference to the first aspect, in a first possible implementation manner,
the sending unit is further configured to send a reference signal to the receiving apparatus, so that the receiving apparatus performs communication channel estimation according to the reference signal, where the reference signal is a signal known to the receiving apparatus.

With reference to the first possible implementation manner of the first aspect, in a second possible implementation manner,
the receiving unit is further configured to receive the reference signal sent by the sending unit; and
the estimation unit is further configured to perform self-interference channel estimation according to the estimation signal and the reference signal that are received by the receiving unit.

With reference to any one of the first aspect to the second possible implementation manner of the first aspect, in a third possible implementation manner,
the self-interference channel estimation apparatus is a half-duplex communications transceiver or a full-duplex communications transceiver.

With reference to any one of the first aspect to the third possible implementation manner of the first aspect, in a fourth possible implementation manner,
the estimation signal is a data signal or a control signal.

According to a second aspect, a self-interference channel estimation apparatus is provided, including: a processor, a memory, a transmitter, a receiver, and a bus, where the processor, the memory, the transmitter, and the receiver are connected to each other by using the bus, where
the transmitter is configured to send an estimation signal to a receiving apparatus, where the estimation signal is a signal unknown to the receiving apparatus;
the receiver is configured to receive the estimation signal sent by the transmitter; and
the processor is configured to perform self-interference channel estimation according to the estimation signal received by the receiver.

With reference to the second aspect, in a first possible implementation manner,
the transmitter is further configured to send a reference signal to the receiving apparatus, so that the receiving apparatus performs communication channel estimation according to the reference signal, where the reference signal is a signal known to the receiving apparatus.

With reference to the first possible implementation manner of the second aspect, in a second possible implementation manner,
the receiver is further configured to receive the reference signal sent by the transmitter; and
the processor is further configured to perform self-interference channel estimation according to the estimation signal and the reference signal that are received by the receiver.

With reference to any one of the second aspect to the second possible implementation manner of the second aspect, in a third possible implementation manner,
the self-interference channel estimation apparatus is a half-duplex communications transceiver or a full-duplex communications transceiver.

With reference to any one of the second aspect to the third possible implementation manner of the second aspect, in a fourth possible implementation manner,
the estimation signal is a data signal or a control signal.

According to a third aspect, a self-interference channel estimation method is provided, including:
sending, by a self-interference channel estimation apparatus, an estimation signal to a receiving apparatus, where the estimation signal is a signal unknown to the receiving apparatus;
receiving, by the self-interference channel estimation apparatus, the estimation signal sent by the self-interference channel estimation apparatus; and
performing, by the self-interference channel estimation apparatus, self-interference channel estimation according to the received estimation signal.

With reference to the third aspect, in a first possible implementation manner, the method further includes:
sending, by the self-interference channel estimation apparatus, a reference signal to the receiving apparatus, so that the receiving apparatus performs communication channel estimation according to the reference signal, where the reference signal is a signal known to the receiving apparatus.

With reference to the first possible implementation manner of the third aspect, in a second possible implementation manner, the method further includes:
receiving, by the self-interference channel estimation apparatus, the reference signal sent by the self-interference channel estimation apparatus; and
the performing, by the self-interference channel estimation apparatus, self-interference channel estimation according to the received estimation signal includes:
   performing, by the self-interference channel estimation apparatus, self-interference channel estimation according to the received estimation signal and reference signal.

With reference to any one of the third aspect to the second possible implementation manner of the third aspect, in a third possible implementation manner,
the self-interference channel estimation apparatus is a half-duplex communications transceiver or a full-duplex communications transceiver.

With reference to any one of the third aspect to the third possible implementation manner of the third aspect, in a fourth possible implementation manner,
the estimation signal is a data signal or a control signal.

According to the self-interference channel estimation method and apparatus provided in the embodiments of the present invention, the self-interference channel estimation apparatus sends an estimation signal to a receiving apparatus and receives the estimation signal sent by the self-interference channel estimation apparatus, where the estimation signal is a signal unknown to the receiving apparatus; and performs self-interference channel estimation according to the received estimation signal, which increases a system throughput.

### BRIEF DESCRIPTION OF DRAWINGS

To describe the technical solutions in the embodiments of the present invention or in the prior art more clearly, the following briefly introduces the accompanying drawings required for describing the embodiments and the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a self-interference channel estimation method according to an embodiment of the present invention;
FIG. 2 is a schematic flowchart of a self-interference channel estimation method according to another embodiment of the present invention;
FIG. 3 is a schematic diagram of distribution of occupied time-frequency resources during self-interference channel estimation according to the prior art;
FIG. 4 is a schematic diagram of distribution of occupied time-frequency resources during self-interference channel estimation according to an embodiment of the present invention;
FIG. 5 is a schematic structural diagram of a self-interference channel estimation apparatus according to an embodiment of the present invention; and
FIG. 6 is a schematic structural diagram of a self-interference channel estimation apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

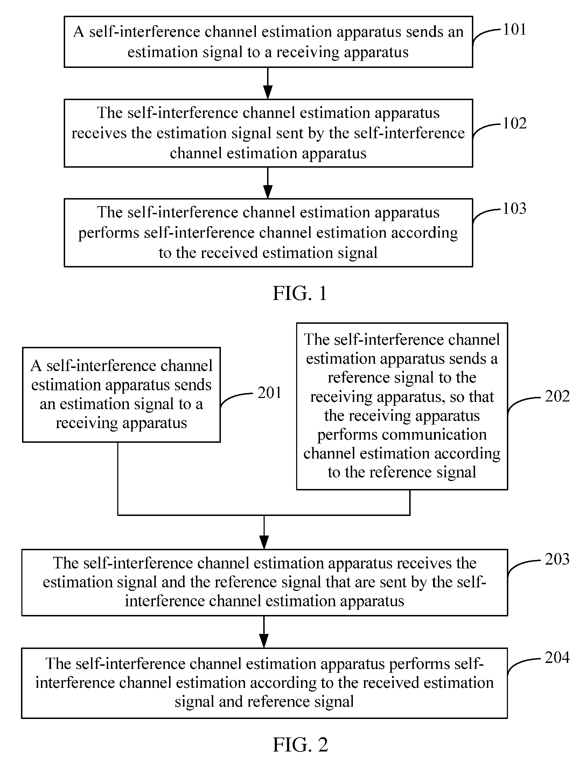

Referring to FIG. 1, an embodiment of the present invention provides a self-interference channel estimation method, including the following steps:
101. A self-interference channel estimation apparatus sends an estimation signal to a receiving apparatus.

The estimation signal is a signal unknown to the receiving apparatus. Specifically and optionally, the unknown signal may be a data signal or a control signal; certainly, a signal unknown to the receiving apparatus in the present invention is not limited to these two signals. Therefore, for the receiving apparatus, the received unknown signal not only is used for self-interference channel estimation, but also transmits data or control signaling, which increases a system throughput. However, in the prior art, a reference signal used for communication channel estimation is used to perform self-interference channel estimation. The reference signal is a signal known to the receiving apparatus and is used for communication channel estimation and self-interference channel estimation. A time-frequency resource occupied by the reference signal is not used to transmit a data signal and a control signal, which reduces the system throughput.

Optionally, the self-interference channel estimation apparatus may be a full-duplex communications transceiver or a half-duplex communications transceiver, and certainly, is not limited to these two communications transceivers.

102. The self-interference channel estimation apparatus receives the estimation signal sent by the self-interference channel estimation apparatus.

103. The self-interference channel estimation apparatus performs self-interference channel estimation according to the received estimation signal.

Herein, that the self-interference channel estimation apparatus performs self-interference channel estimation according to the estimation signal does not represent that the self-interference channel estimation apparatus uses only the estimation signal to perform estimation; the self-interference channel estimation apparatus may also use another signal at the same time to perform self-interference channel estimation, and this embodiment is not limited thereto.

In the prior art, a reference signal used for communication channel estimation is used for self-interference channel estimation, and is a signal known to both communication parties. The known reference signal does not transmit data or control signaling and is used for communication channel estimation and self-interference channel estimation. Therefore, a system throughput is reduced to some extent because the reference signal occupies a time-frequency resource. However, when performing self-interference channel estimation, a self-interference channel estimation apparatus needs to receive only a signal known to the self-interference channel estimation apparatus. Therefore, when sending a signal, the self-interference channel estimation apparatus does not need to send a reference signal known to both the self-interference channel estimation apparatus and a receiving apparatus. In addition, no matter whether the signal transmitted by the self-interference channel estimation apparatus is known to the receiving apparatus, the transmitted signal is a signal known to the self-interference channel estimation apparatus. Therefore, it can be absolutely implemented that a signal unknown to the receiving apparatus is used as an estimation signal to perform self-interference channel estimation. In addition, because the estimation signal used for self-interference channel estimation is a control signal or a data signal unknown to the receiving apparatus, time-frequency resource utilization is improved, and the system throughput is increased.

According to the self-interference channel estimation method provided in this embodiment of the present invention, a self-interference channel estimation apparatus sends an estimation signal to a receiving apparatus and receives the estimation signal sent by the self-interference channel estimation apparatus, where the estimation signal is a signal unknown to the receiving apparatus; and performs self-interference channel estimation according to the received estimation signal, which increases a system throughput.

Based on the embodiment corresponding to FIG. 1, another embodiment of the present invention provides a self-interference channel estimation method, which is a self-interference channel estimation method in practical application described with reference to communication channel estimation. Referring to FIG. 2, the method includes the following steps:
201. A self-interference channel estimation apparatus sends an estimation signal to a receiving apparatus.

The estimation signal is a signal unknown to the receiving apparatus. Specifically and optionally, the signal unknown to the receiving apparatus may be a data signal or a control signal.

Optionally, the self-interference channel estimation apparatus may be a full-duplex communications transceiver or a half-duplex communications transceiver, and certainly, is not limited to these two communications transceivers.

202. The self-interference channel estimation apparatus sends a reference signal to the receiving apparatus, so that the receiving apparatus performs communication channel estimation according to the reference signal.

The reference signal is a signal known to the receiving apparatus.

Herein, there is no sequence relationship between step 201 and step 202.

203. The self-interference channel estimation apparatus receives the estimation signal and the reference signal that are sent by the self-interference channel estimation apparatus.

204. The self-interference channel estimation apparatus performs self-interference channel estimation according to the received estimation signal and reference signal.

Specifically and optionally, a channel response of a self-interference channel may be estimated by means of algorithms such as the minimum mean square error and the least square method, and details are not described herein again.

Reference signals used for communication channel estimation are required to be densely distributed in a time domain and sparsely distributed in a frequency domain. Therefore, during self-interference channel estimation, if only an estimation signal is sent and used for self-interference channel estimation, a reference signal cannot be sent in a time domain occupied by the estimation signal, which affects communication channel estimation. In addition, signals used for self-interference channel estimation are required to be sparsely distributed in a time domain and densely distributed in a frequency domain. In this case, because the signals are densely distributed in the frequency domain, when a signal is received for self-interference channel estimation, a reference signal is likely to be included.

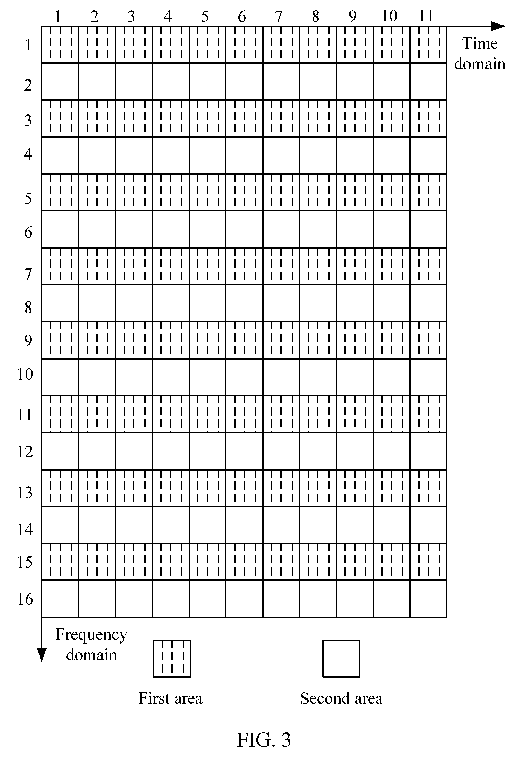

In the prior art, both communication channel estimation and self-interference channel estimation use a reference signal. However, a change rate of a communication channel is much higher than that of a self-interference channel, reference signals are required to be densely distributed in a time domain during communication channel estimation, and reference signals are required to be densely distributed in a frequency domain during self-interference channel estimation so as to reduce an estimation error brought by frequency domain interpolation. Therefore, in the prior art, reference signals need to be densely distributed in both the time domain and the frequency domain, and occupy a large quantity of time-frequency resources. In addition, the reference signals are signals known to both communication parties, are used to perform channel estimation, and do not transmit data and control signaling; therefore, a system throughput is reduced to some extent. In addition, because two estimation methods need to be considered, system design is extremely complicate. As shown in FIG. 3, a horizontal axis indicates time domain distribution, and a vertical axis indicates frequency domain distribution. From left to right, the 11-column time domains are successively the first time domain to the eleventh time domain; from top to bottom, the 16-row frequency domains are successively the first frequency domain to the sixteenth frequency domain. First areas are time-frequency resources occupied by signals unknown to a receiving apparatus, such as time-frequency resources occupied by control signals or data signals. Second areas are time-frequency resources occupied by reference signals used for communication channel estimation and self-interference channel estimation. A reference signal in the first time domain and a reference signal in the eleventh time domain are used for self-interference channel estimation.

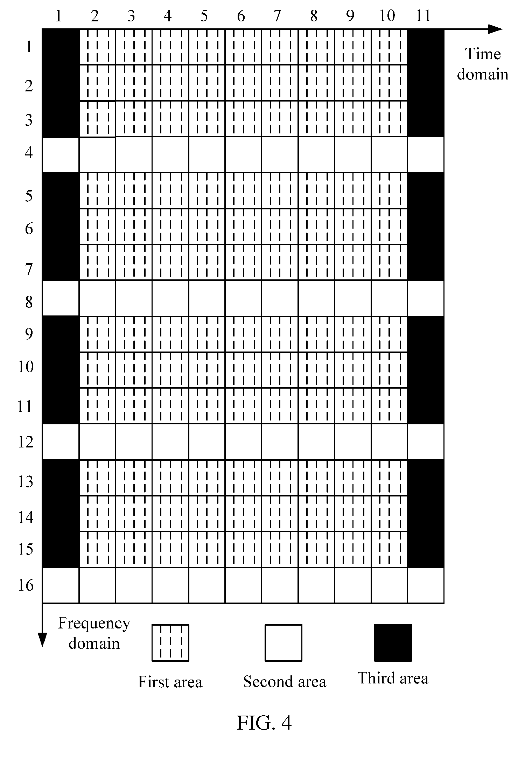

According to the present invention, a signal unknown to a receiving apparatus, that is, an estimation signal, is used to perform self-interference channel estimation, which can improve time-frequency resource utilization. Because the estimation signal is a control signal or a data signal unknown to the receiving apparatus, the estimation signal not only is used for self-interference channel estimation but also transmits data or control signaling, which increases a system throughput. In addition, for reference signals used for communication channel estimation, a characteristic that signals need to be densely distributed in a frequency domain during self-interference channel estimation does not need to be considered anymore, which also reduces frequency domain resources occupied by the known reference signals. This part of frequency domain resources may be used to transmit data and control signaling, which also increases the system throughput. In addition, because there is no need to consider two estimation methods of self-interference channel estimation and communication channel estimation, system design complexity also is reduced. As shown in FIG. 4, first areas are time-frequency resources occupied by signals unknown to a receiving apparatus, second areas are time-frequency resources occupied by known reference signals used by the receiving apparatus to perform communication channel estimation, and third areas in the first time domain and the eleventh time domain are time-frequency resources occupied by estimation signals used for self-interference channel estimation, where the third areas are a part or all of the first areas. In the figure of this embodiment, the third areas are a part of the first areas. The estimation signals also are signals unknown to the receiving apparatus, such as data signals or control signals. Therefore, in a practical case, in the first time domain and the eleventh time domain that are used for self-interference channel estimation, reference signals used for communication channel estimation may also be used for self-interference channel estimation, that is, second areas and the third areas that are in the first time domain and the eleventh time domain may be used for self-interference channel estimation. By means of comparing with FIG. 3, it may be learned that signals unknown to the receiving apparatus, such as data signals or control signaling, are used as estimation signals for self-interference channel estimation in this embodiment, and for reference signals in this embodiment, the characteristic that signals are densely distributed in a frequency domain during self-interference channel estimation does not need to be considered; therefore, in the first time domain and the eleventh time domain, some second areas in FIG. 3 become third areas in FIG. 4, that is, second areas in the second frequency domain, the sixth frequency domain, the tenth frequency domain, and the fourteenth frequency domain in FIG. 3 become first areas in FIG. 4. Therefore, first areas and third areas that are used to transmit signals unknown to the receiving apparatus, such as data and control signaling, are increased. In this way, time-frequency resource areas that are not used to transmit data or control signaling are second areas; therefore, time-frequency resource utilization is improved, and the system throughput is increased. Certainly, time-frequency resource distribution shown in FIG. 3 and FIG. 4 is merely one case. There may be various time-frequency resource distribution manners according to specific requirements. FIG. 3 and FIG. 4 are merely intended to reflect a time-frequency resource distribution change between the prior art and the present invention, which does not represent that the present invention is limited only to this kind of time-frequency resource distribution.

According to the self-interference channel estimation method provided in this embodiment of the present invention, a self-interference channel estimation apparatus sends an estimation signal to a receiving apparatus and receives the estimation signal sent by the self-interference channel estimation apparatus, where the estimation signal is a signal unknown to the receiving apparatus; and performs self-interference channel estimation according to the received estimation signal, which increases a system throughput. Further, the self-interference channel estimation apparatus may receive a reference signal sent by the self-interference channel estimation apparatus, and perform self-interference channel estimation according to the received estimation signal and reference signal, which increases the system throughput and reduces design complexity without affecting communication channel estimation.

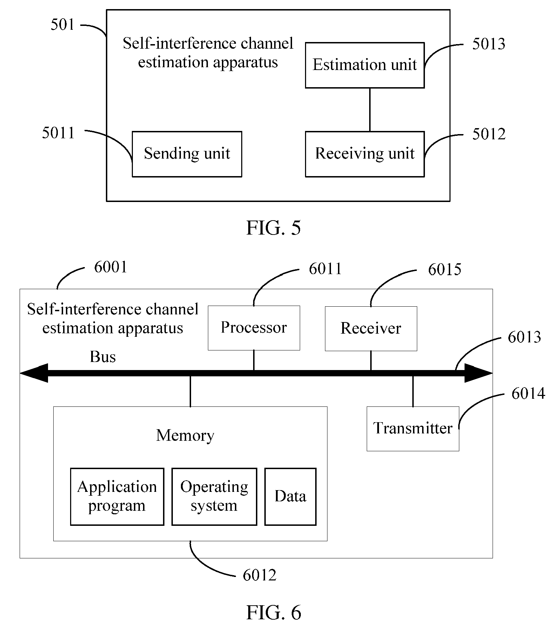

An embodiment of the present invention provides a self-interference channel estimation apparatus, where a structure of the apparatus is shown in FIG. 5. The self-interference channel estimation apparatus 501 includes: a sending unit 5011, a receiving unit 5012, and an estimation unit 5013.

The sending unit 5011 is configured to send an estimation signal to a receiving apparatus, where the estimation signal is a signal unknown to the receiving apparatus.

The receiving unit 5012 is configured to receive the estimation signal sent by the sending unit 5011.

The estimation unit 5013 is configured to perform self-interference channel estimation according to the estimation signal received by the receiving unit 5012.

The self-interference channel estimation apparatus provided in this embodiment of the present invention sends an estimation signal to a receiving apparatus and receives the estimation signal sent by the self-interference channel estimation apparatus, where the estimation signal is a signal unknown to the receiving apparatus; and performs self-interference channel estimation according to the received estimation signal, which increases a system throughput.

Optionally, the sending unit 5011 is further configured to send a reference signal to the receiving apparatus, so that the receiving apparatus performs communication channel estimation according to the reference signal, where the reference signal is a signal known to the receiving apparatus.

Further optionally, the receiving unit 5012 is further configured to receive the reference signal sent by the sending unit 5011.

The estimation unit 5013 is further configured to perform self-interference channel estimation according to the estimation signal and the reference signal that are received by the receiving unit 5012.

The self-interference channel estimation apparatus provided in this embodiment of the present invention sends an estimation signal to a receiving apparatus and receives the estimation signal sent by the self-interference channel estimation apparatus, where the estimation signal is a signal unknown to the receiving apparatus; and performs self-interference channel estimation according to the received estimation signal, which increases a system throughput.

Another embodiment of the present invention provides a self-interference channel estimation apparatus. Referring to FIG. 6, the device may be built into or the device itself may be a computer with a microprocessor, such as a general-purpose computer, a customized computer, or a portable device such as a mobile phone terminal or a tablet. The self-interference channel estimation apparatus 6001 includes: at least one processor 6011, a memory 6012, a bus 6013, a transmitter 6014, and a receiver 6015, where the at least one processor 6011, the memory 6012, the transmitter 6014, and the receiver 6015 are connected to and complete communication with each other by using the bus 6013.

The bus 6013 may be an ISA (Industry Standard Architecture, industry standard architecture) bus, a PCI (Peripheral Component, peripheral component interconnect) bus, an EISA (Extended Industry Standard Architecture, Extended Industry Standard Architecture) bus, or the like. The bus 6013 may be classified into an address bus, a data bus, a control bus, and the like. For ease of denotation, the bus is represented by using only one bold line with arrows in FIG. 6, which, however, does not indicate that there is only one bus or only one type of bus, where
the memory 6012 is configured to store executable program code, where the program code includes a computer operation instruction; the memory 6012 may include a high-speed RAM memory, and may also include a non-volatile memory (non-volatile memory), for example, at least one disk memory.

The processor 6011 may be a central processing unit 6011 (Central Processing Unit, CPU for short), or an application specific integrated circuit (Application Specific Integrated Circuit, ASIC for short), or one or more integrated circuits configured to implement this embodiment of the present invention.

The transmitter 6014 is configured to send an estimation signal to a receiving apparatus, where the estimation signal is a signal unknown to the receiving apparatus.

The receiver 6015 is configured to receive the estimation signal sent by the transmitter 6014.

The processor 6011 is configured to perform self-interference channel estimation according to the estimation signal received by the receiver 6015.

The self-interference channel estimation apparatus provided in this embodiment of the present invention sends an estimation signal to a receiving apparatus and receives the estimation signal sent by the self-interference channel estimation apparatus, where the estimation signal is a signal unknown to the receiving apparatus; and performs self-interference channel estimation according to the received estimation signal, which increases a system throughput.

Optionally, the transmitter 6014 is further configured to send a reference signal to the receiving apparatus, so that the receiving apparatus performs communication channel estimation according to the reference signal, where the reference signal is a signal known to the receiving apparatus.

Further optionally, the receiver 6015 is further configured to receive the reference signal sent by the transmitter 6014.

The processor 6011 is further configured to perform self-interference channel estimation according to the estimation signal and the reference signal that are received by the receiver 6015.

The self-interference channel estimation apparatus provided in this embodiment of the present invention sends an estimation signal to a receiving apparatus and receives the estimation signal sent by the self-interference channel estimation apparatus, where the estimation signal is a signal unknown to the receiving apparatus; and performs self-interference channel estimation according to the received estimation signal, which increases a system throughput.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM (Random Access Memory, random access memory), a ROM (Read Only Memory, read only memory), an EEPROM (Electrically Erasable Programmable Read Only Memory, electrically erasable programmable read only memory), a CD-ROM (Compact Disc Read Only Memory, compact disc read only memory), or another optical disc storage or magnetic disk storage medium, or another magnetic storage device, or any other medium that can be used to carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a DSL (Digital Subscriber Line, digital subscriber line) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk and disc used by the present invention includes a CD (Compact Disc, compact disc), a laser disc, an optical disc, a DVD (Digital Versatile Disc, digital versatile disc), a floppy disk and a Blu-ray disc, where the disk generally copies data by a magnetic means, and the disc copies data optically by a laser means. The foregoing combination should also be included in the protection scope of the computer-readable medium.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A self-interference channel estimation apparatus, comprising:
a sending unit, configured to send an estimation signal to a receiving apparatus, wherein the estimation signal is a signal unknown to the receiving apparatus;
a receiving unit, configured to receive the estimation signal sent by the sending unit; and
an estimation unit, configured to perform self-interference channel estimation according to the estimation signal received by the receiving unit.

2. The apparatus according to claim 1, wherein:
the sending unit is further configured to send a reference signal to the receiving apparatus, so that the receiving apparatus performs communication channel estimation according to the reference signal, wherein the reference signal is a signal known to the receiving apparatus.

3. The apparatus according to claim 2, wherein:
the receiving unit is further configured to receive the reference signal sent by the sending unit; and
the estimation unit is further configured to perform self-interference channel estimation according to the estimation signal and the reference signal that are received by the receiving unit.

4. The apparatus according to any one of claims 1 to 3, wherein:
the self-interference channel estimation apparatus is a half-duplex communications transceiver or a full-duplex communications transceiver.

5. The apparatus according to any one of claims 1 to 4, wherein:
the estimation signal is a data signal or a control signal.

6. A self-interference channel estimation apparatus, comprising: a processor, a memory, a transmitter, a receiver, and a bus, wherein the processor, the memory, the transmitter, and the receiver are connected to each other by using the bus, wherein
the transmitter is configured to send an estimation signal to a receiving apparatus, wherein the estimation signal is a signal unknown to the receiving apparatus;
the receiver is configured to receive the estimation signal sent by the transmitter;
and
the processor is configured to perform self-interference channel estimation according to the estimation signal received by the receiver.

7. The apparatus according to claim 6, wherein:
the transmitter is further configured to send a reference signal to the receiving apparatus, so that the receiving apparatus performs communication channel estimation according to the reference signal, wherein the reference signal is a signal known to the receiving apparatus.

8. The apparatus according to claim 7, wherein:
the receiver is further configured to receive the reference signal sent by the transmitter; and
the processor is further configured to perform self-interference channel estimation according to the estimation signal and the reference signal that are received by the receiver.

9. The apparatus according to any one of claims 6 to 8, wherein:
the self-interference channel estimation apparatus is a half-duplex communications transceiver or a full-duplex communications transceiver.

10. The apparatus according to any one of claims 6 to 9, wherein:
the estimation signal is a data signal or a control signal.

11. A self-interference channel estimation method, comprising:
sending, by a self-interference channel estimation apparatus, an estimation signal to a receiving apparatus, wherein the estimation signal is a signal unknown to the receiving apparatus;
receiving, by the self-interference channel estimation apparatus, the estimation signal sent by the self-interference channel estimation apparatus; and
performing, by the self-interference channel estimation apparatus, self-interference channel estimation according to the received estimation signal.

12. The method according to claim 11, wherein the method further comprises:
sending, by the self-interference channel estimation apparatus, a reference signal to the receiving apparatus, so that the receiving apparatus performs communication channel estimation according to the reference signal, wherein the reference signal is a signal known to the receiving apparatus.

13. The method according to claim 12, wherein the method further comprises:
receiving, by the self-interference channel estimation apparatus, the reference signal sent by the self-interference channel estimation apparatus; and
the performing, by the self-interference channel estimation apparatus, self-interference channel estimation according to the received estimation signal comprises:
performing, by the self-interference channel estimation apparatus, self-interference channel estimation according to the received estimation signal and reference signal.

14. The method according to any one of claims 11 to 13, wherein:
the self-interference channel estimation apparatus is a half-duplex communications transceiver or a full-duplex communications transceiver.

15. The method according to any one of claims 11 to 14, wherein:
the estimation signal is a data signal or a control signal.
